# EUROPÄISCHE PATENTSCHRIFT

(11) **EP 3 388 023 B1**
(45) Veröffentlichungstag und Bekanntmachung des Hinweises auf die Patenterteilung: **03.06.2020**
(21) Anmeldenummer: 18161677.2
(22) Anmeldetag: 14.03.2018
(51) Int. Cl.: A61C 19/02, A45C 11/00, A45D 44/20

(54) **AUFBEWAHRUNGSDOSE**
STORAGE CONTAINER
BOÎTE DE CONSERVATION

(30) Priorität: 13.04.2017 DE 102017108134; 15.12.2017 DE 102017130120
(43) Veröffentlichungstag der Anmeldung: 17.10.2018
(73) Patentinhaber: DENTiCASE Dr. Fricke + Krahnert GbR, 88696 Owingen (DE)
(72) Erfinder: Fricke, Carsten, 88085 Langenargen (DE); Krahnert, Carsten, 88696 Owingen (DE)
(74) Vertreter: Kaufmann, Ursula Josefine

(56) Entgegenhaltungen:
- EP-A1- 2 199 447
- EP-A1- 2 653 054
- EP-A1- 3 090 649
- CN-A- 104 816 885
- GB-A- 788 178
- JP-U- S60 109 510
- ANONYMOUS: "Antimicrobial Solutions for Plastic Articles", INTERNET CITATION, 9. Januar 2010 (2010-01-09), Seiten 1-2, XP002688312, Gefunden im Internet: URL:http://www.rtpcompany.com/products/col or/antimicrobials.htm [gefunden am 2012-11-29]

## Beschreibung

### Stand der Technik

Die Erfindung betrifft eine Aufbewahrungsdose für ein herausnehmbares intraorales Hilfsmittel, insbesondere für Therapie- und/oder Präventionszwecke.

Häufig werden intraorale Hilfsmittel, wie etwa Zahnspangen, Bruxismusschienen und dergleichen, in Aufbewahrungsdosen trocken gelagert. Die Aufbewahrungsdosen sind üblicherweise einfache Kunststoffdosen, in welche das Hilfsmittel gereinigt oder ungereinigt abgelegt wird.

Aus der DE 10138190 A1 ist eine Aufbewahrungsdose bekannt, welche innen mit einer saugfähigen Einlage ausgekleidet ist, welche mit einer antibakteriellen und/oder geschmacksverbessernden Mundspüllösung getränkt werden kann, um das Hilfsmittel in einer feuchten Umgebung lagern zu können.

Die EP 2653054 A1 betrifft eine Aufbewahrungsdose zur Aufbewahrung von Zahnschienen und dergleichen. Im Boden sind Belüftungsöffnungen angebracht. Das Gehäusematerial ist mit anti-bakteriellen Zusätzen versehen.

EP 3090649 A1 offenbart einen Behälter, in welchem eine elektrische Zahnbürste hygienisch aufbewahrt werden kann. Der Behälter weist einen Deckel und einen Gehäusetopf auf. Im Deckel sind Belüftungsöffnungen vorgesehen. Im Gehäusetopf ist ein Formkörper eingebracht, der unter anderem ein herausnehmbares Reservoir eines Trocknungsmittels umfasst.

### Offenbarung der Erfindung

Die Aufgabe der Erfindung ist es, eine verbesserte Aufbewahrungsdose zu schaffen, welche einfach und hygienisch handzuhaben ist.

Die Aufgabe wird durch die Merkmale des unabhängigen Anspruchs gelöst. Günstige Ausgestaltungen und Vorteile der Erfindung ergeben sich aus den weiteren Ansprüchen, der Beschreibung und der Zeichnung.

Die Erfindung geht aus von einer Aufbewahrungsdose für ein im Mund getragenes, herausnehmbares intraorales Hilfsmittel für Therapie- und/oder Präventionszwecke, welche ein Gehäuse mit Gehäusetopf und Gehäusedeckel und wenigstens einer Belüftungsöffnung umfasst.

Es wird vorgeschlagen, dass im Inneren des Gehäuses wenigstens eine Trocknungssubstanz angeordnet ist, welche Feuchtigkeit im Innern des Gehäuses aufnimmt und adsorbiert und/oder bindet. Ferner weist der Gehäusetopf und/oder der Gehäusedeckel die wenigstens eine Belüftungsöffnung auf. Im Innern des Gehäuses ist wenigstens ein Formkörper vorgesehen, welcher einen Aufnahmebereich zur Aufnahme des intraoralen Hilfsmittels aufweist. Der Formkörper ist als topfförmiges Einsatzteil ausgebildet mit einem Boden, einer Wand und einem nach außen weisenden Rand. Der Rand weist wenigstens eine Belüftungsöffnung auf, die im in das Gehäuse eingesetzten Zustand mit der wenigstens einen Belüftungsöffnung in Gehäusetopf und/oder Gehäusedeckel korrespondiert. In der Wand ist wenigstens ein Durchbruch im Wandbereich an der wenigstens einen Belüftungsöffnung im Rand angeordnet vorgesehen.

Vorzugsweise reduziert die Trocknungssubtanz die Luftfeuchte in dem Gehäuse. Dadurch, dass die Trocknungssubstanz Feuchtigkeit im Innern des Gehäuses aufnimmt und diese Feuchtigkeit adsorbiert und/oder bindet, wird eine trockene Atmosphäre im Innern des Gehäuses aufrechterhalten. Auch nasse oder feucht eingelegte intraorale Hilfsmittel trocknen schnell ab und können trocken gelagert werden. Die Trocknungssubstanz dient zur des intraoralen Hilfsmittels Trockenlagerung und ist besonders hygienisch. Dadurch, dass das Innere des Gehäuses mittels der Trocknungssubstanz trocken gehalten wird, kann vorteilhaft eine Bakterien- und Schimmelbildung im Gehäuse oder auf dem intraoralen Hilfsmittel stark verzögert werden, so dass eine Aufbewahrung des intraoralen Hilfsmittels unter hygienischen Bedingungen möglich ist. Dies gilt vor allem dann, wenn das im Mund getragene intraorale Hilfsmittel mehrmals am Tag bei Bedarf herausgenommen wird, ohne dass ein Abspülen oder gar eine Reinigung des intraoralen Hilfsmittels möglich ist. In der Aufbewahrungsdose ist das intraorale Hilfsmittel dabei vor mechanischen Schäden geschützt und unter hygienischen Bedingungen gelagert.

Auf eine mit einer bakteriziden Flüssigkeit oder dergleichen getränkte Einlage kann verzichtet werden. Dies ist vorteilhaft für Personen, insbesondere für Kinder, die eine etwaige Überempfindlichkeit oder Allergie gegenüber derartigen Flüssigkeiten aufweisen. Würde aus diesen Gründen jedoch auf die Flüssigkeit verzichtet, wäre mit raschem Bakterienwachstum und Schimmelbildung zu rechnen, wenn das intraorale Hilfsmittel nicht vor der Ablage in die Aufbewahrungsdose gereinigt und getrocknet werden kann, was im täglichen Gebrauch solcher Hilfsmittel, gerade, aber nicht nur bei Kindern, häufig unpraktikabel ist.

Im Gegensatz dazu verringert die Trocknungssubstanz den Feuchtegehalt in der Aufbewahrungsdose zuverlässig und verzögert dadurch das Wachstum von Keimen und Pilzen deutlich, auch wenn das intraorale Hilfsmittel nicht vor der Ablage gereinigt und getrocknet werden kann. Mit besonderem Vorteil ist vorgesehen, dass das intraorale Hilfsmittel in der Aufbewahrungsdose auf einem Bereich abgelegt ist, der die Trocknungssubstanz aufweist. Insbesondere kann die Trocknungssubstanz in einem Kissen (Pad) vorgesehen sein, das als Ablage für das intraorale Hilfsmittel dient.

Nach einer günstigen Ausgestaltung kann die Trocknungssubstanz einen Superabsorber umfassen. Superabsorber sind an sich bekannt. Vorteilhaft werden Superabsorber eingesetzt, wie sie in Windeln, Binden, Tupfern oder dergleichen bekannt sind, die dazu vorgesehen sind, große Mengen an Flüssigkeit aufzunehmen. Superabsorber werden üblicherweise als Granulat angeboten und können ein Mehrfaches an Eigengewicht an Flüssigkeit unter entsprechender Volumenzunahme aufnehmen. Übliche Superabsorber sind Kunststoffe, die als Granulat angeboten werden und die aus vernetzten, polaren Polymeren gebildet sind und daher die polaren Wassermoleküle elektrostatisch binden können. Durch die Wasseraufnahme bildet der Superabsorber ein Hydrogel. Häufig sind die Superabsorber-Partikel oberflächenbehandelt, indem an der Oberfläche der Partikel ein weiteres vernetztes Polymer angeordnet wird, welches das aufgequollene Hydrogel schützt und einen Wasseraustritt verhindert. Ist die Trocknungssubstanz erschöpft oder ist ein Zeitraum verstrichen, über den Bakterienwachstum und/oder Schimmelbildung sicher verzögert werden kann, kann die Trocknungssubstanz in der Aufbewahrungsdose einfach ausgetauscht werden. Ein solcher Zeitraum beträgt beispielsweise mehrere Tage, vorzugsweise mindestens drei Tage, besonders bevorzugt mindestens vier Tage.

Nach einer günstigen Ausgestaltung kann die Trocknungssubstanz alternativ oder zusätzlich ein hygroskopisches Material umfassen. Günstigerweise kann dies ein regenerierbares Material sein, etwa Kieselgel.

Nach einer günstigen Ausgestaltung kann das Innere des Gehäuses zumindest bereichsweise mit einer Lage der Trocknungssubstanz ausgekleidet sein. Insbesondere kann die Trocknungssubstanz in der Lage in einem Vlies oder Gewebe eingebracht sein. Beispielsweise kann die Trocknungssubstanz zwischen zwei Vlieslagen angeordnet sein, so dass die Vlieslagen die Trocknungssubstanz sicher einschließen. Ein Austreten der Trocknungssubstanz in das Gehäuse oder gar ein direkter Kontakt der Trocknungssubstanz mit dem intraoralen Hilfsmittel kann vermieden werden. Die Trocknungssubstanz kann einfach als Polster oder Kissen im Gehäuse aufgenommen sein. Mit Vorteil kann vorgesehen sein, dass das intraorale Hilfsmittel auf der Lage mit der Trocknungssubstanz abgelegt sein kann, womit gleichzeitig zur effizienten Trocknung eine gepolsterte Lagerung des intraoralen Hilfsmittels erfolgen kann. Alternativ oder zusätzlich kann die Lage mit Trocknungssubstanz auch an der Innenwand des Gehäuses angebracht sein. Die Lage ist vorzugsweise als Kissen (Pad) ausgebildet.

Dadurch, dass erfindungsgemäß der Gehäusetopf und/oder der Gehäusedeckel wenigstens eine Belüftungsöffnung aufweisen, ist die Wirkung der Trocknungssubstanz insbesondere bei mehrtägigem Gebrauch verbessert und die Bakterienbildung vermindert.

Erfindungsgemäß ist im Innern des Gehäuses wenigstens ein Formkörper vorgesehen, welcher einen Aufnahmebereich zur Aufnahme des intraoralen Hilfsmittels aufweist. Insbesondere kann der Aufnahmebereich eine Aussparung zur Aufnahme des intraoralen Hilfsmittels sein. Insbesondere kann die Trocknungssubstanz innerhalb des Aufnahmebereichs, insbesondere der Aussparung, angeordnet vorgesehen sein. So kann das intraorale Hilfsmittel besonders schonend in der Aussparung abgelegt werden und von den Seitenwänden der Aussparung gegen unerwünschte Seitenbewegungen geschützt werden. Die Trocknungssubstanz kann beispielsweise auf dem Boden der Aussparung, beispielsweise in einem Kissen, und/oder an der Innenwand der Aussparung angeordnet sein.

Günstigerweise kann jeweils ein Formkörper mit einer Aussparung sowohl im Gehäusetopf als auch im Gehäusedeckel angeordnet sein. Es können vorteilhaft Gleichteile eingesetzt werden, die preisgünstig herstellbar sind.

Nach einer günstigen Ausgestaltung kann die Trocknungssubstanz in einer Schüttung in das Gehäuse eingebracht sein. Insbesondere kann die Schüttung der Trocknungssubstanz gekapselt im Gehäuse eingebracht sein. Dies ist besonders günstig bei einem hygroskopischen Mittel. Die Kapselung, welche die Trocknungssubstanz enthält, ist zweckmäßigerweise mit Öffnungen versehen, welche Feuchtigkeit aus dem Inneren des Gehäuses in die Trocknungssubstanz eintreten lassen. Das Gehäuse kann dazu ein separates Fach enthalten, das die Schüttung aufnimmt und das mit einem Deckel verschließbar ist. Alternativ kann die Schüttung in einem separaten, herausnehmbaren Aufnahmebehälter im Gehäuse untergebracht sein.

Nach einer günstigen Ausgestaltung kann der Formkörper aus dem Gehäuse herausnehmbar ausgebildet sein. Dies vereinfacht die Reinigung und Pflege der Aufbewahrungsdose. Ferner ist die Herstellung von Gehäuse und Formkörper vereinfacht und kostengünstig, da vereinfachte Werkzeuge zur Herstellung von Gehäuse und Formkörper eingesetzt werden können.

Erfindungsgemäß ist der Formkörper ein topfförmiges Einsatzteil, das mit einem Boden, einer Wand und einem nach außen weisenden Rand ausgebildet ist. Die einfache Geometrie ist günstig herstellbar. Der Rand weist wenigstens eine Öffnung auf. Dadurch, dass der Rand eine Öffnung aufweist, kann eine Belüftung innerhalb des Gehäuses verbessert werden. Auf dem Boden kann die Lage mit Trocknungssubstanz abgelegt sein. Der Boden ist in der Aussparung des Formkörpers. Vorteilhaft kann das intraorale Hilfsmittel auf dem Boden des Formkörpers abgelegt werden.

Erfindungsgemäß weist der Rand des Formkörpers wenigstens eine Öffnung auf, die im in das Gehäuse eingesetzten Zustand mit einer wenigstens einen Belüftungsöffnung in Gehäusetopf und/oder Gehäusedeckel korrespondiert.

Dies wird verwirklicht indem die wenigstens eine Öffnung im Rand und die wenigstens eine Belüftungsöffnung in Gehäusedeckel und/oder Gehäusetopf wenigstens bereichsweise überlappen. So kann eine Luftzufuhr in die Aufbewahrungsdose verbessert werden.

Erfindungsgemäß ist in der Wand wenigstens ein Durchbruch vorgesehen. Der Durchbruch ist im Wandbereich an der wenigstens einen Belüftungsöffnung im Gehäuserand angeordnet vorgesehen. Vorteilhaft kann der Durchbruch bis auf den Boden des Formkörpers reichen. Der Durchbruch erleichtert das Herausnehmen des Formkörpers, ebenso kann das Herausnehmen eines Kissens mit Trocknungssubstanz, das auf dem Boden abgelegt ist, vereinfacht werden, da das Kissen in dem Durchbruch einen frei zugänglichen Randbereich aufweist. Insbesondere in Kombination des Durchbruchs mit der wenigstens einen Belüftungsöffnung im Rand des Formkörpers und im Gehäusedeckel und/oder Gehäusetopf kann sichergestellt werden, dass ein Luftaustausch im Innern der Aufbewahrungsdose erfolgen kann, selbst wenn durch unsachgemäßen Gebrauch der Durchbruch durch einen eingelegten Gegenstand ganz oder teilweise verdeckt sein sollte.

Nach einer günstigen Ausgestaltung kann das Gehäuse wenigstens an seiner Innenseite mit einer bakteriziden und/oder fungiziden Beschichtung versehen sein und/oder aus einem bakteriziden und/oder fungiziden Material gebildet sein. Dies erhöht den Hygienestandard der Aufbewahrungsdose weiter.

Nach einer günstigen Ausgestaltung kann im Inneren des Gehäuses eine Aufnahme für einen Behälter vorgesehen sein. Der Behälter kann beispielsweise ein erfrischendes Mundspray oder ein Desinfektionsmittel enthalten, mit dem das intraorale Hilfsmittel vor der Wiederbenutzung eingesprüht werden kann, um einen angenehmen Geschmack für den Benutzer bereitzustellen. Vorteilhaft kann die Aufnahme im Formkörper integriert sein. Die Aufnahme kann eine einfache Vertiefung sein. Günstigerweise kann die Aufnahme der Form des Behälters angepasst sein. Optional kann im Gehäusedeckel ein Gegenelement vorgesehen sein, so dass bei eingelegtem Behälter und geschlossenen Gehäusedeckel der Behälter von zwei Seiten fixiert ist. Optional oder zusätzlich können Rastmittel vorgesehen sein, um den Behälter im Gehäuse zu fixieren.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: in isometrischer Darstellung eine Aufbewahrungsdose nach einem Ausführungsbeispiel der Erfindung im geöffneten Zustand;
- Fig. 2: in isometrischer Darstellung eine Aufbewahrungsdose im geöffneten Zustand nach einem weiteren Ausführungsbeispiel der Erfindung mit eingelegtem Behälter;
- Fig. 3: in isometrischer Darstellung eine Schrägansicht auf eine Aufbewahrungsdose im geschlossenen Zustand nach einem weiteren Ausführungsbeispiel der Erfindung;
- Fig. 4: in Draufsicht auf das Innere einer aufgeklappten Aufbewahrungsdose nach einem weiteren Ausführungsbeispiel der Erfindung mit Formkörpern im Gehäusedeckel und im Gehäusetopf, die als Gleichteile ausgebildet sind;
- Fig. 5: eine Detailansicht des Formkörpers aus Figur 4;
- Fig. 6: in isometrischer Darstellung eine Schrägansicht einer Aufbewahrungsdose im geschlossenen Zustand nach einem weiteren Ausführungsbeispiel der Erfindung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

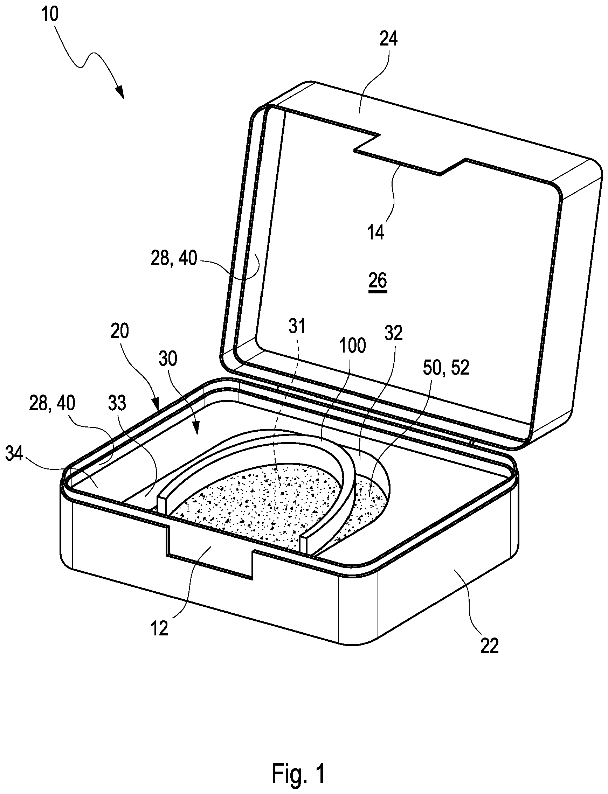

Die Figur 1 zeigt zur Erläuterung der Erfindung ein Ausführungsbeispiel einer Aufbewahrungsdose 10 für ein herausnehmbares intraorales Hilfsmittel 100, insbesondere für Therapie- und/oder Präventionszwecke, insbesondere im geöffneten Zustand ihres Gehäuses 20. Das Gehäuse 20 weist wenigstens eine Belüftungsöffnung auf.

Das Gehäuse 20 weist einen Gehäusetopf 22 und Gehäusedeckel 24 auf. Gehäusetopf 22 und Gehäusedeckel 24 sind mit einem Scharnier gelenkig verbunden und können beim Verschließen mit einer Rastverbindung, etwa über Schnappelemente 12, 14, die an Gehäusetopf 22 und Gehäusedeckel 24 angebracht sind, verrastet werden.

Im Innern 26 des Gehäuses 20 ist ein Formkörper 30 angeordnet, welcher einen Aufnahmebereich in Form einer Aussparung 32 für das intraorale Hilfsmittel 100 aufweist. Der Formkörper 30 kann ein Einsatzteil sein, das in das Gehäuse 20 eingesetzt wird, oder eine Ausformung im Gehäuse 20. Insbesondere kann der Formkörper 30 zerstörungsfrei herausnehmbar sein.

Im dargestellten Beispiel ist eine Lage 52 einer Trocknungssubstanz 50 als Kissen im Inneren 26 des Gehäuses 20 innerhalb der Aussparung 32 angeordnet. Die Trocknungssubstanz 50 nimmt Feuchtigkeit im Innern 26 des Gehäuses 20 auf und adsorbiert und/oder bindet diese.

Dabei kann die Trocknungssubstanz 50 in der Lage 52 in einem Vlies oder Gewebe eingebettet sein, so dass sie nicht direkt mit dem intraoralen Hilfsmittel 100 in Kontakt kommen kann. Das intraorale Hilfsmittel 100 ist in der Aussparung 32 auf dem Kissen abgelegt.

Die Trocknungssubstanz 50 umfasst in einer Ausführung einen Superabsorber. Optional kann die Trocknungssubstanz 50 ein hygroskopisches Material umfassen. Ebenso können ein Superabsorber und ein hygroskopisches Material in Kombination als Trocknungssubstanz 50 eingesetzt werden.

Optional kann das Gehäuse 20 wenigstens an seiner Innenseite 28 mit einer bakteriziden und/oder fungiziden Beschichtung 40 versehen und/oder aus einem bakteriziden und/oder fungiziden Material gebildet sein. Dies kann die ganze Innenseite 28 von Gehäusedeckel 24 und Gehäusetopf 22 betreffen oder nur einen Teil davon.

Bevorzugt ist das Gehäuse 20 aus einem Kunststoff gebildet, vorzugsweise einem spülmaschinenfesten Kunststoff. Optional kann das Gehäuse 20 auch aus Metall gebildet sein. Ist der Formkörper 30 herausnehmbar, kann dieser zur Reinigung von Formkörper 30 und Gehäuse 20 aus dem Gehäuse 20 herausgenommen werden. Die Trocknungssubstanz 50 wird vorher entfernt.

Optional kann die Trocknungssubstanz 50 in einer nicht dargestellten Schüttung in das Gehäuse 20 eingebracht sein, vorzugsweise ist die Schüttung in einem Aufnahmebehälter gekapselt. Der Aufnahmebehälter kann separat oder in das Gehäuse 20 integriert sein.

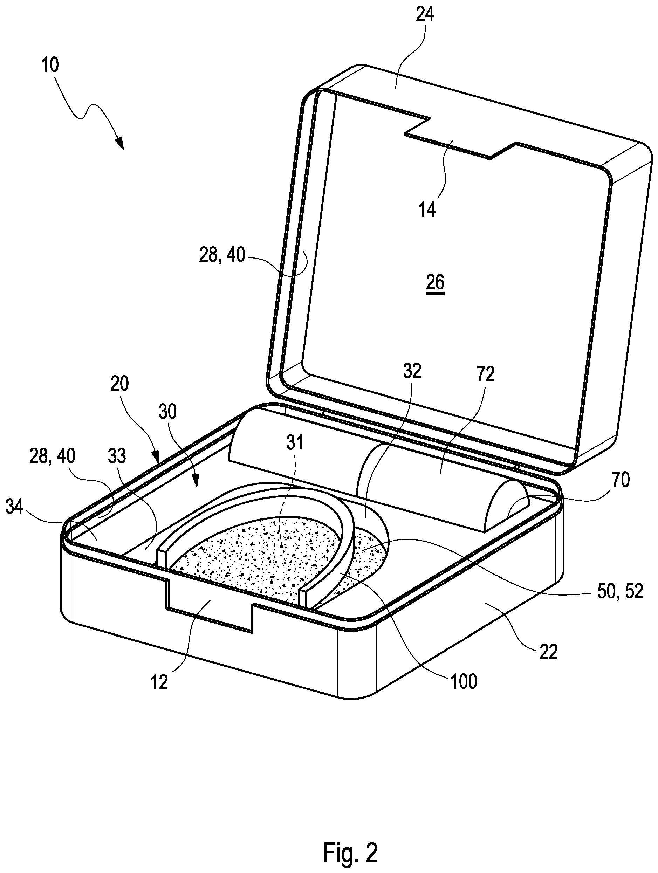

Figur 2 zeigt eine Variante des Ausführungsbeispiels der Aufbewahrungsdose 10 aus Figur 1. Zur detaillierten Beschreibung wird zur Vermeidung von Wiederholungen auf Figur 1 verwiesen. Zusätzlich ist im Inneren 26 des Gehäuses 20 eine Aufnahme 70 für einen Behälter 72 vorgesehen. Der Behälter 72 kann beispielsweise im Formkörper 30 gelagert sein.

In der Figur ist die Aufnahme 70 mit dem Behälter 72 leicht zugänglich hinter der Aussparung 32 für das Hilfsmittel 100 vorgesehen.

Optional kann auch eine Befestigung mittels Klemmung, Verrastung, Klettverschluss oder dergleichen vorgesehen sein. Der Behälter 72 ist vorzugsweise mit einem Mundspray oder Desinfektionsspray gefüllt, so dass vor Wiedereinsetzen des intraoralen Hilfsmittels 100 dieses mit einer Mundspüllösung oder einem Desinfektionsmittel besprüht werden kann.

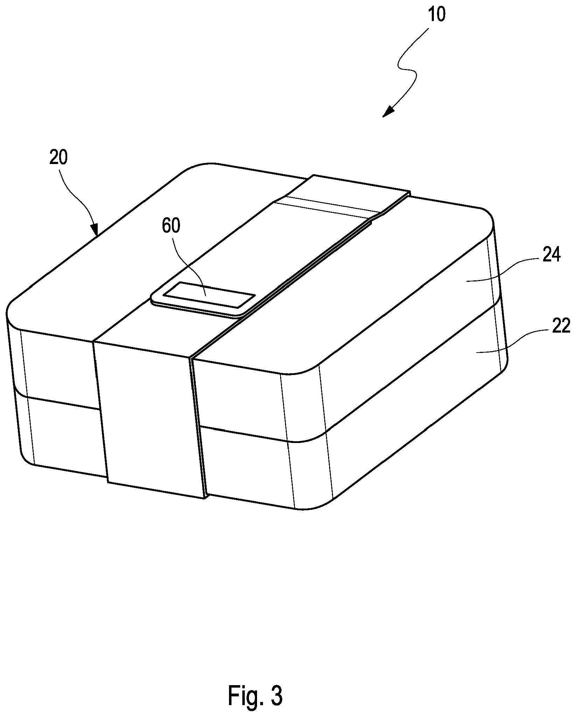

Figur 3 zeigt eine Aufbewahrungsdose 10 mit geschlossenem Gehäuse 20. Um die Aufbewahrungsdose 10 ist ein Band 60 gelegt, welches zum Individualisieren der Aufbewahrungsdose 10 dienen kann, beispielsweise durch eine Beschriftung, Farbgebung oder dergleichen. Optional kann das Band 60 auch als Verschluss dienen, etwa als geschlossenes Gummiband oder als offenes elastisches oder nicht elastisches Band 60, dessen Enden übereinander gelegt und mittels Magnetverschluss, Klettverschluss oder dergleichen verbunden sind.

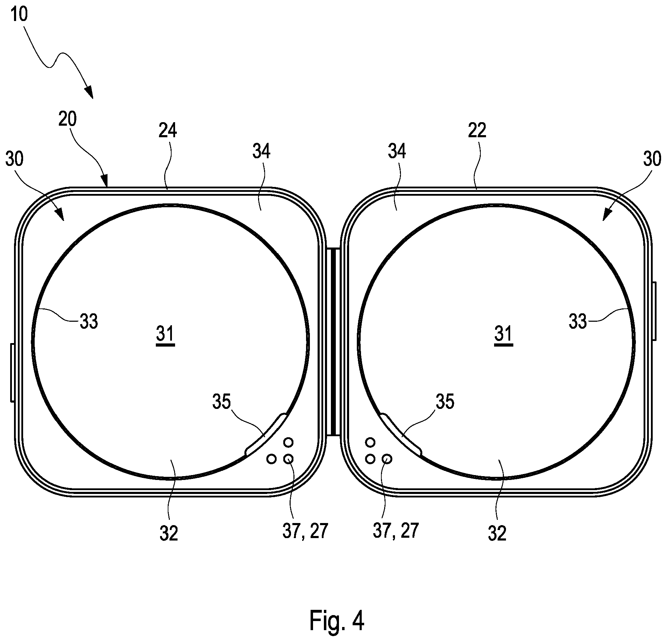

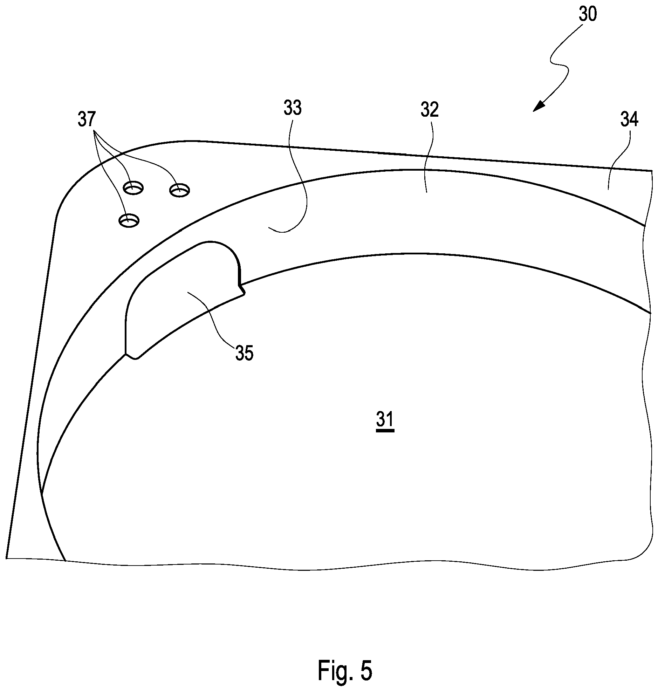

Figur 4 zeigt in Draufsicht auf das Innere 26 einer aufgeklappten Aufbewahrungsdose 10 nach einem weiteren Ausführungsbeispiel der Erfindung mit Formkörpern 30 jeweils im Gehäusedeckel 24 und im Gehäusetopf 22, die als Gleichteile ausgebildet sind. Figur 5 zeigt eine Detailansicht des Formkörpers 30 aus Figur 4.

Der Gehäusedeckel 24 weist mehrere Belüftungsöffnungen 27 auf. Die Formkörper 30 sind als topfförmige Einsatzteile ausgebildet, die aus dem Gehäuse 20 herausnehmbar ausgebildet sind. Der topfförmige Formkörper 30 weist einen Boden 31, eine Wand 33 und einen nach außen weisenden Rand 34 auf. Auf dem Boden 31 kann ein Kissen mit Trocknungssubstanz, beispielsweise ein Pad mit Superabsorber, abgelegt werden, und darauf das intraorale Hilfsmittel, z.B. eine Bissschiene oder dergleichen.

Der Rand 34 des Formkörpers 30 weist einen Bereich mit Öffnungen 37 auf, der im in das Gehäuse 20 eingesetzten Zustand des Formkörpers 30 den Bereich mit Belüftungsöffnungen 27 im Gehäusedeckel 24 überlappt.

In der Wand 33 ist ein Durchbruch 35 vorgesehen, der vorzugsweise im Wandbereich an den im Rand 34 vorgesehenen Belüftungsöffnungen 37 angeordnet ist. Der Durchbruch 35 erleichtert das Fassen eines Kissens, das auf dem Boden 31 des Formkörpers 30 abgelegt ist, auf dem das intraorale Hilfsmittel abgelegt werden kann, und ermöglicht gleichzeitig mit den Öffnungen 37 im Rand 34 und den Öffnungen 27 im Gehäuse 20 einen Luftaustausch, selbst wenn der Durchbruch 35 durch einen unsachgemäß in der Aufbewahrungsdose 10 abgelegten Gegenstand verdeckt sein sollte. Optional kann sich der Durchbruch 35 auch über die Kante in den Rand 34 hinein erstrecken, so dass der Durchbruch 35 im Rand 34 eine Öffnung bildet. In diesem Fall können alle weiteren oder einige der Öffnungen 37 im Rand 34 entfallen.

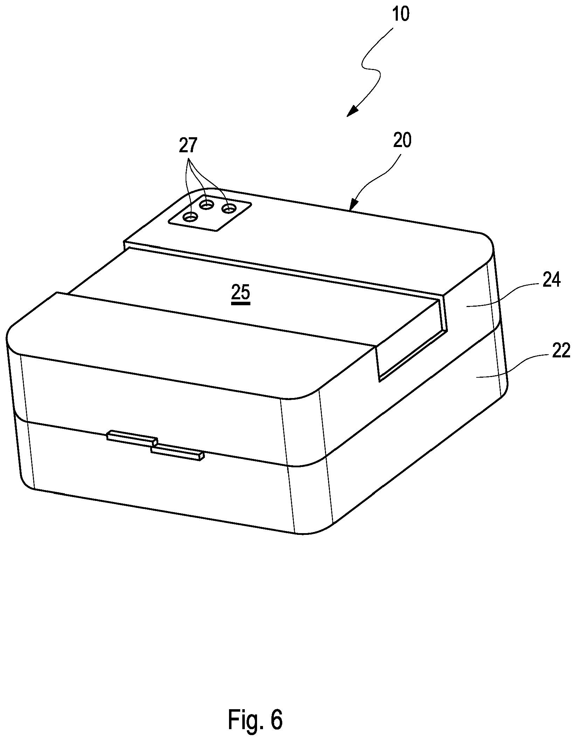

Figur 6 zeigt in isometrischer Darstellung eine Schrägansicht einer Aufbewahrungsdose 10 im geschlossenen Zustand nach einem weiteren Ausführungsbeispiel der Erfindung. Die Aufbewahrungsdose 10 hat eine quadratische Grundfläche mit gerundeten Ecken der Seitenwände. Im Gehäusedeckel 24 ist ein Bereich mit Belüftungsöffnungen 27 angeordnet. Die Oberseite des Gehäusedeckels 24 weist eine den gesamten Gehäusedeckel 24 übergreifenden Vertiefung 25 auf. In der Vertiefung 25 kann zur Individualisierung der Aufbewahrungsdose 10 beispielsweise ein Aufkleber aufgeklebt werden. Die Vertiefung ermöglicht es, dass der Aufkleber bei Gebrauch bzw. beim Mitsichführen der Aufbewahrungsdose ungewollt abgeschält wird, da die Kanten des Aufklebers weitgehend durch die Vertiefung 25 geschützt sind.

## Patentansprüche

1. Aufbewahrungsdose (10) für ein im Mund getragenes, herausnehmbares intraorales Hilfsmittel (100)für Therapie- und/oder Präventionszwecke, welche ein Gehäuse (20) mit Gehäusetopf (22) und Gehäusedeckel (24) und wenigstens einer Belüftungsöffnung (27) umfasst, wobei
- im Inneren (26) des Gehäuses (20) wenigstens eine Trocknungssubstanz (50) angeordnet ist, welche Feuchtigkeit im Innern des Gehäuses (20) aufnimmt und adsorbiert und/oder bindet,
- der Gehäusetopf (22) und/oder der Gehäusedeckel (24) die wenigstens eine Belüftungsöffnung (27) aufweist,
- im Innern (26) des Gehäuses (20) wenigstens ein Formkörper (30) vorgesehen ist, welcher einen Aufnahmebereich zur Aufnahme des intraoralen Hilfsmittels (100) aufweist,
- der Formkörper (30) als topfförmiges Einsatzteil ausgebildet ist mit einem Boden (31), einer Wand (33) und einem nach außen weisenden Rand (34),
- der Rand (34) wenigstens eine Belüftungsöffnung (37) aufweist, die im in das Gehäuse (20) eingesetzten Zustand die in Gehäusetopf (22) und/oder Gehäusedeckel (24) angeordnete wenigstens eine Belüftungsöffnung (27) wenigstens bereichsweise überlappt, und
wobei in der Wand (33) wenigstens ein Durchbruch (35) im Wandbereich an der wenigstens einen Belüftungsöffnung (37) im Rand (34) angeordnet vorgesehen ist.

2. Aufbewahrungsdose nach Anspruch 1, **dadurch gekennzeichnet, dass** die Trocknungssubstanz (50) einen Superabsorber umfasst.

3. Aufbewahrungsdose nach Anspruch 1 oder 2, **dadurch gekennzeichnet, dass** die Trocknungssubstanz (50) ein hygroskopisches Material umfasst.

4. Aufbewahrungsdose nach einem der vorhergehenden Ansprüche, **dadurch gekennzeichnet, dass** das Innere (26) des Gehäuses (20) zumindest bereichsweise mit einer Lage (52) der Trocknungssubstanz (50) ausgekleidet ist.

5. Aufbewahrungsdose nach Anspruch 4, **dadurch gekennzeichnet, dass** die Trocknungssubstanz (50) in der Lage (52) in einem Vlies oder Gewebe eingebracht ist.

6. Aufbewahrungsdose nach einem der vorhergehenden Ansprüche, **dadurch gekennzeichnet, dass** der Formkörper (30) als Aufnahmebereich zur Aufnahme des intraoralen Hilfsmittels (100), eine Aussparung (32) aufweist.

7. Aufbewahrungsdose nach Anspruch 6, **dadurch gekennzeichnet, dass** die Trocknungssubstanz (50) innerhalb des Aufnahmebereichs, insbesondere der Aussparung (32), angeordnet vorgesehen ist, insbesondere wobei die Aussparung (32) zur Aufnahme der Trocknungssubstanz (50) und des intraoralen Hilfsmittels (100) vorgesehen ist.

8. Aufbewahrungsdose nach einem der vorhergehenden Ansprüche, **dadurch gekennzeichnet, dass** die Trocknungssubstanz (50) in einer Schüttung in das Gehäuse (20) eingebracht ist.

9. Aufbewahrungsdose nach Anspruch 8, **dadurch gekennzeichnet, dass** die Schüttung der Trocknungssubstanz (50) gekapselt im Gehäuse (20) eingebracht ist.

10. Aufbewahrungsdose nach einem der Ansprüche 6 bis 9, **dadurch gekennzeichnet, dass** der Formkörper (30) aus dem Gehäuse (20) herausnehmbar ausgebildet ist.

11. Aufbewahrungsdose nach Anspruch 6 bis 10, **dadurch gekennzeichnet, dass** der Boden (31) zur Aufnahme der Trocknungssubstanz (50) und des intraoralen Hilfsmittels (100) vorgesehen ist.

12. Aufbewahrungsdose nach einem der vorhergehenden Ansprüche, **dadurch gekennzeichnet, dass** das Gehäuse (20) wenigstens an seiner Innenseite (28) mit einer bakteriziden und/oder fungiziden Beschichtung (40) versehen ist und/oder aus einem bakteriziden und/oder fungiziden Material gebildet ist.

13. Aufbewahrungsdose nach einem der vorhergehenden Ansprüche, **dadurch gekennzeichnet, dass** im Inneren (26) des Gehäuses (20) eine Aufnahme (70) für einen Behälter (72), insbesondere eine Spraydose, vorgesehen ist.

## Claims

1. Storage container (10) for a removable intraoral aid (100) that is worn in the mouth for therapeutic and/or preventive purposes, which comprises a housing (20) with housing pot (22) and housing cover (24) and at least one ventilation opening (27), wherein
- at least one drying substance (50) is arranged in the interior (26) of the housing (20) and receives and adsorbs and/or binds moisture in the interior of the housing (20),
- the housing pot (22) and/or the housing cover (24) has the at least one ventilation opening (27),
- at least one moulded body (30) is provided in the interior (26) of the housing (20) and has a receiving region for receiving the intraoral aid (100),
- the moulded body (30) is formed as a pot-shaped insert with a bottom (31), a wall (33) and an outward-pointing rim (34),
- the rim (34) has at least one ventilation opening (37) which, in the state when inserted into the housing (20), overlaps, at least in regions, the at least one ventilation opening (27) arranged in the housing pot (22) and/or housing cover (24), and
wherein in the wall (33) at least one aperture (35) is provided so as to be arranged in the wall region on the at least one ventilation opening (37) in the rim (34).

2. Storage container according to claim 1, **characterised in that** the drying substance (50) comprises a superabsorber.

3. Storage container according to claim 1 or 2, **characterised in that** the drying substance (50) comprises a hygroscopic material.

4. Storage container according to any of the preceding claims, **characterised in that** the interior (26) of the housing (20) is lined, at least in regions, with a layer (52) of the drying substance (50).

5. Storage container according to claim 4, **characterised in that** the drying substance (50) is introduced into the layer (52) in a non-woven or woven fabric.

6. Storage container according to any of the preceding claims, **characterised in that** the moulded body (30) has a recess (32) as the receiving region for receiving the intraoral aid (100).

7. Storage container according to claim 6, **characterised in that** the drying substance (50) is provided so as to be arranged inside the receiving region, in particular the recess (32), in particular wherein the recess (32) is provided for receiving the drying substance (50) and the intraoral aid (100).

8. Storage container according to any of the preceding claims, **characterised in that** the drying substance (50) is introduced into the housing (20) in a bed.

9. Storage container according to claim 8, **characterised in that** the bed of the drying substance (50) is introduced in the housing (20) in encapsulated form.

10. Storage container according to any of claims 6 to 9, **characterised in that** the moulded body (30) is designed to be removable from the housing (20).

11. Storage container according to claim 6 to 10, **characterised in that** the bottom (31) is provided for receiving the drying substance (50) and the intraoral aid (100).

12. Storage container according to any of the preceding claims, **characterised in that** the housing (20) is provided, at least on its inner side (28), with a bactericidal and/or fungicidal coating (40) and/or is formed from a bactericidal and/or fungicidal material.

13. Storage container according to any of the preceding claims, **characterised in that** a receptacle (70) for a container (72), in particular a spray can, is provided in the interior (26) of the housing (20).

## Revendications

1. Boîte de stockage (10) pour un accessoire intra-oral (100) porté dans la bouche, pouvant être retiré, aux fins de thérapie et/ou de prévention, laquelle comprend un boîtier (20) avec pot de boîtier (22) et couvercle de boîtier (24) et au moins une ouverture d'aération (27),
dans laquelle
- au moins une substance de dessication (50), laquelle absorbe et adsorbe et/ou fixe l'humidité à l'intérieur du boîtier (20), est disposée à l'intérieur (26) du boîtier (20),
- le pot de boîtier (22) et/ou le couvercle de boîtier (24) présente l'au moins une ouverture d'aération (27),
- au moins un corps moulé (30), lequel présente une zone de logement destinée à loger l'accessoire intra-oral (100), est prévu à l'intérieur (26) du boîtier (20),
- le corps moulé (30) est réalisé sous la forme d'une pièce d'insertion en forme de pot avec un fond (31), une paroi (33) et un bord (34) orienté vers l'extérieur,
- le bord (34) présente au moins une ouverture d'aération (37), qui, dans l'état inséré dans le boîtier (20), chevauche au moins par endroits l'au moins une ouverture d'aération (27) disposée dans le pot de boîtier (22) et/ou couvercle de boîtier (24), et
dans laquelle au moins une percée (35), disposée dans la zone de paroi sur l'au moins une ouverture d'aération (37) dans le bord (34), est prévue dans la paroi (33).

2. Boîte de stockage selon la revendication 1, **caractérisée en ce que** la substance de dessication (50) comprend un superabsorbant.

3. Boîte de stockage selon la revendication 1 ou 2, **caractérisée en ce que** la substance de dessication (50) comprend un matériau hygroscopique.

4. Boîte de stockage selon l'une quelconque des revendications précédentes, **caractérisée en ce que** l'intérieur (26) du boîtier (20) est revêtu au moins par endroits d'une couche (52) de la substance de dessication (50).

5. Boîte de stockage selon la revendication 4, **caractérisée en ce que** la substance de dessication (50) est introduite dans la couche (52) dans un non-tissé ou tissu.

6. Boîte de stockage selon l'une quelconque des revendications précédentes, **caractérisée en ce que** le corps moulé (30) présente un évidement (32) en tant que zone de logement destinée à loger l'accessoire intra-oral (100).

7. Boîte de stockage selon la revendication 6, **caractérisée en ce que** la substance de dessication (50) est prévue de manière disposée à l'intérieur de la zone de logement, en particulier l'évidement (32), en particulier dans laquelle l'évidement (32) est prévu pour loger la substance de dessication (50) et l'accessoire intra-oral (100).

8. Boîte de stockage selon l'une quelconque des revendications précédentes, **caractérisée en ce que** la substance de dessication (50) est introduite en vrac dans le boîtier (20).

9. Boîte de stockage selon la revendication 8, **caractérisée en ce que** le vrac de la substance de dessication (50) est introduit de manière encapsulée dans le boîtier (20).

10. Boîte de stockage selon l'une quelconque des revendications 6 à 9, **caractérisée en ce que** le corps moulé (30) est réalisé de manière à pouvoir être retiré du boîtier (20).

11. Boîte de stockage selon la revendication 6 à 10, **caractérisée en ce que** le fond (31) est prévu pour loger la substance de dessication (50) et l'accessoire intra-oral (100).

12. Boîte de stockage selon l'une quelconque des revendications précédentes, **caractérisée en ce que** le boîtier (20) est pourvu au moins sur sa face intérieure (28) d'un revêtement (40) bactéricide et/ou fongicide et/ou est formé d'un matériau bactéricide et/ou fongicide.

13. Boîte de stockage selon l'une quelconque des revendications précédentes, **caractérisée en ce qu'**un logement (70) pour un contenant (72), en particulier un aérosol, est prévu dans l'intérieur (26) du boîtier (20).
